# EUROPEAN PATENT APPLICATION

(11) **EP 3 053 452 A1**
(43) Date of publication of application: **10.08.2016**
(21) Application number: 15151362.9
(22) Date of filing: 16.01.2015
(51) Int. Cl.: A23L 2/58, A23L 5/40, A23L 5/41, C09B 61/00, C09B 67/44, C11D 3/00

(54) **Naturally derived colour stabilizer**

(71) Applicant: Interquim, S.A., 08173 Sant Cugat del Vallès (ES)
(72) Inventor: Cano Hernandez, Jesús, 30588 Beniel (Murcia) (ES); Orteu Baena, Yago, 08029 Barcelona (ES); D'Hoore, Tom Nelly A., 08029 Barcelona (ES)
(74) Representative: Reitstötter Kinzebach

(57) **Abstract**

The present invention relates to the prevention of colour instability or colour fading. It is directed to the use of phloretin, a naturally derived colour stabilizer, as well as to a method of preventing colour instability or colour fading in a colored product by including said stabilizer in said product.

## Description

### FIELD OF THE INVENTION

The present invention relates to the prevention of colour instability or colour fading. It is directed to a naturally derived colour stabilizer as well as to a method of preventing colour instability or colour fading in a colored product by including said stabilizer in said product.

### BACKGROUND

The colour of a food or beverage or any consumer product often determines whether the consumer accepts or rejects the product. Adding colour to foods can encourage acceptance by offsetting colour loss caused by exposure to light, air, temperature extremes, moisture and/or storage conditions.

It is believed that oxidation and/or reduction is primarily responsible for colour instability or colour fading. Oxidation and/or reduction can be chemically-, light- or biologically induced by microbes or enzymes, though light is typically the predominant initiator. Both natural and synthetic (or artificial) colours are known to be degraded or faded, most typically upon exposure to UV light. Secondary chemical reduction initiators may be present in certain beverages, such as ascorbic acid, hydroxymethylfurfural (HMF formed in HFCS) and metals. Moreover, these initiators work with light to fade colours. Thus the presence of an antioxidant, such as ascorbic acid, in the beverage product can promote the fading of colours.

Colours can react with HMF and other carbohydrate degradation products to form browning compounds. The mechanism of the reaction, which is very noticeable in fruit juices, is known, and it is very temperature dependent and is hastened by the presence of oxygen.

When beverages are packaged in glass or polyethylene terephthalate (PET) containers, they are even more susceptible to problematic colour instability or colour fading.

A number of solutions for preventing colour degradation have been described. Document WO9714319A1 describes the combination of an anthocyanin and a pigment-improving agent selected from flavonoid glucuronides and sulphates, galacturonides and caffeic acid derivatives in order to deepen and improve the intensity of the anthocyanin and to increase its stability.

Document JP 6-93199 discloses the use of chlorogenic acid, caffeic acid or ferulic acid as an anti-fading agent for natural gardenian yellow colour. Document US 5,314,686 discloses that rosemary, sage and thyme have colour sparing properties with respect to natural colours such as annatto, bixin, paprika and carotenoids.

Document US 5,336,510 discloses the use of riboflavin (vitamin B2) as a colour stabilizer in azo-coloured beverages fortified with vitamin C. Document US 6,379,729 disclose the use of a combination of sulfurous acid and sorbic acid to obtain a colour stabilizing effect in foods or beverages colored with an anthocyanin. Document WO2013013014 describes the use of enzymatically modified isoquercitrin (EMIQ), rutin and myricitrin, and fumaric acid as protectors of colours derived from natural sources.

Document US 8,420,141 describes that fading of synthetically colored beverages is prevented using botanically derived colour stabilizers which are C₆-C₃ phenylpropenoic carbonyl compounds which contain both unsaturation and oxidation at a carbon atom.

Thus, there is a need in the art to develop a naturally derived colour stabilizing agent which would efficiently decrease or prevent colour instability, colour fading or colour loss in consumer products, which have been coloured with natural or artificial colorants.

### SUMMARY OF THE INVENTION

As it is shown in the Examples accompanying the present invention, the authors of the present invention have found that when a compound of formula (I) is added to a consumer product such as, for example, a beverage, said compound (I) can surprisingly reduce or prevent colour instability or the fading or loss of colour imparted by a synthetic or naturally derived colour to said product.

Thus in an aspect, the present invention refers to the use of a compound of formula (I) or a derivative or salt thereof 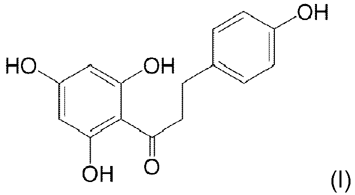 for stabilizing colour, preventing colour instability or colour fading in a colored product.

### BRIEF DESCRIPTION OF THE FIGURES

Figure 1 represents the absorbance (465 nm) of a beverage over time with phloretin (50 ppm) and without phloretin.
Figure 2 represents the absorbance (466 nm) of samples at different β-carotene concentrations by varying either the dilution volume (upper panel) or the Altratene weight (lower panel).
Figure 3 represents the absorbance (466 nm) of non-carbonated beverages (samples A, B, C, D) over time.
Figure 4 represents the absorbance (466 nm) of carbonated beverages (samples A, B, C, D) over time.

### DETAILED DESCRIPTION OF THE INVENTION

As mentioned above, the authors of the present invention have found that a compound of formula (I) can surprisingly substantially lessen or prevent colour instability or the fading or loss of colour imparted by a synthetic or naturally derived colour to said product.

Thus in a first aspect, the invention refers to the use of a compound of formula (I) or a derivative or salt thereof 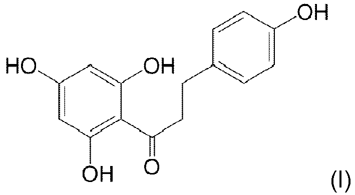 for stabilizing colour, preventing colour instability or colour fading in a colored product.

The compound of formula (I) commonly known as phloretin 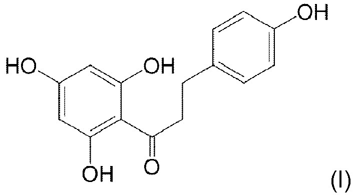 is a dihydrochalcone, a type of natural phenols. Naturally, it can be found in apple tree leaves and the Manchurian apricot. Phloretin can be obtained from apples, apple juice, and cider. Also, this compound is commercially available. The compound of formula (I) can additionally can be synthesized according to procedures known by the skilled person in the art. Therefore, the compound of formula (I) as used herein also refers to any synthetic equivalent. As mentioned above, the use of the compound of formula (I) according to the present invention also refers to a derivative or salt thereof.

As used herein, the term "synthetic equivalent" refers to synthetically produced phloretin.

As used herein, the term "derivative" refers to esters of phloretin, in particular esters with C₂ to C₆ alkanoic acids. 1, 2, 3 or 4 hydroxyl groups of phloretin may be esterified with the same or different alkanoic acids.

Salts of the compound of formula (I) may be formed with inorganic bases such as alkali metal hydroxides and alkaline earth metal hydroxides. Examples for salts are the sodium and potassium salts.

As used herein, the term "colour fading" refers to loss of colour hue or intensity. As mentioned above, the compound of formula (I) can not only prevent colour fading but also colour instability or colour loss. Therefore, as used herein, the term "colour stabilizer" refers to a compound able to prevent or reduce colour instability, colour fading or color loss. Same while the term "colour stabilizing amount" as used herein refers to an amount sufficient to substantially lessen or prevent colour instability or the fading or loss of colour imparted by a synthetic or naturally derived colour to a product.

An effective amount of the compound (I) according to the present invention is added to or combined with beverage products or other consumer products according to the present invention. Accordingly, an effective amount can vary depending on the type of product being treated and the length of time preservation of colour is desired.

In a preferred embodiment, said colour stabilizer compound is able to stabilize colour, prevent colour instability or the fading or loss of colour for a period of at least one month, more preferably for a period of at least two months, even more preferably for a period of at least three months and even more preferably for a period of at least six months.

Typically, the product is preserved under ambient conditions, which include the full range of temperatures experienced during storage, transport, and display (e.g., 0 °C to 40 °C, 10 °C to 30 °C, 20 °C to 25 °C) without limitation to the length of exposure to any given temperature.

In a particular embodiment of the invention, said consumer product is a beverage, a food product, a cosmetic or personal care product, a pharmaceutical product or cleaning agent product. In a preferred embodiment of the invention, said product is a beverage.

As used herein, the term "beverage" refers to a finished beverage, though the naturally derived colour stabilizer may be added at any point in beverage manufacture, i.e., syrup, concentrate, or finished beverage, which may be contained in a glass or plastic (such as PET) container. As used herein, such beverages include, but are not limited to a carbonated beverage, a non-carbonated beverage, a soft drink, a fruit juice, a fruit juice flavoured drink, a fruit-flavoured drink, an energy drink, a hydration drink, a sport drink, a health and wellness drink, a fountain beverage, a frozen ready-to-drink beverage, a frozen carbonated beverage, a liquid concentrate, a coffee beverage, a tea beverage, a dairy beverage, a soy beverage, a vegetable drink, a flavoured water, an enhanced water, or an alcoholic beverage.

Thus, beverage products according to the present invention include both still and carbonated beverages. Herein, the term "carbonated beverage" is inclusive of any combination of water, juice, flavour and sweetener that is meant to be consumed as an alcohol free liquid and which also is made to possess a carbon dioxide concentration of 0.2 volumes of CO2 or greater. The term "volume of CO2" is understood to mean a quantity of carbon dioxide absorbed into the liquid wherein one volume CO2 is equal to 1.96 grams of carbon dioxide (CO2) per litre of product (0.0455M) at 25 °C. Non-limitative examples of carbonated beverages include flavoured seltzer waters, juices, cola, lemon-lime, ginger ale, and root beer beverages which are carbonated in the manner of soft drinks, as well as beverages that provide health or wellness benefits from the presence of metabolically active substances, such as vitamins, amino acids, proteins, carbohydrates, lipids, or polymers thereof. Such products may also be formulated to contain milk, coffee, or tea or other botanical solids. It is also possible to formulate such beverages to contain one or more nutraceuticals. Herein, a "nutraceutical" is a substance that has been shown to possess, minimally, either a general or specific health benefit or sense of wellness as documented in professional journals or texts. Nutraceuticals, however, do not necessarily act to either cure or prevent specific types of medical conditions.

Herein, the term "still beverage" is any combination of water and ingredient which is meant to be consumed in the manner of an alcohol free liquid beverage and which possesses no greater than 0.2 volumes of carbon dioxide. Non-inclusive examples of still beverages include flavoured waters, tea, coffee, nectars, mineral drinks, sports beverages, vitamin waters, juice-containing beverages, punches or the concentrated forms of these beverages, as well as beverage concentrates which contain at least about 45 percent by weight of juice. Such beverages may be supplemented with vitamins, amino acids, protein-based, carbohydrate-based or lipid-based substances. As noted, the invention includes juice containing products, whether carbonated or still. "Juice containing beverages" or "Juice beverages", regardless of whether still or carbonated, are products containing some or all the components of a fruit, vegetable or nuts or mixture thereof that can either be suspended or made soluble in the natural liquid fraction of the fruit.

By way of example, juice products and juice drinks can be obtained from the fruit of apple, cranberry, pear, peach, plum, apricot, nectarine, grape, cherry, currant, raspberry, goose-berry, blackberry, blueberry, strawberry, lemon, orange, grapefruit, passion fruit, mandarin, Mirabelle, tomato, lettuce, celery, spinach, cabbage, watercress, dandelion, rhubarb, carrot, beet, cucumber, pineapple, custard-apple, coconut, pomegranate, guava, kiwi, mango, papaya, watermelon, lo han guo, cantaloupe, pineapple, banana or banana puree, lemon, mango, papaya, lime, tangerine, and mixtures thereof.

Various acids and combinations of acids with salts of the same or different acids in order to manage pH or the buffer capacity of the beverage to a specified pH or range of pH. The pH is, in general adjusted to a pH in the range from 2.5 to 6. Virtually any organic acid salt can be used so long as it is edible and does not provide an off-flavour. The choice of salt or salt mixture will be determined by the solubility and the taste. Citrate, malate and ascorbate yield ingestible complexes whose flavours are judged to be quite acceptable, particularly in fruit juice beverages. Tartaric acid is acceptable, particularly in grape juice beverages, as is lactic acid. Longer-chain fatty acids may be used but can affect flavour and water solubility.

As it is shown in the Examples accompanying the present invention, the authors of the present invention have additionally found that when phloretin is added in combination with ascorbic acid, the colour stabilizing effect observed is surprisingly increased, i.e. the beverage maintains a more stable colour over the time than when compared with phloretin or ascorbic acid added alone. Thus, in a particular embodiment of the invention, phloretin is added to the product in combination with another stabilizer. In a preferred embodiment said stabilizer is ascorbic acid.

In another particular embodiment of the invention, said colored product comprises a naturally derived colour or its synthetic equivalent or a synthetic colour.

Non limitative examples of said naturally derived colours according to the present invention are *Annatto* extract, astaxanthin, dehydrated beets, canthaxanthin, caramel, Beta-apo-8'-carotenal, beta-carotene, cochineal extract, carmine, sodium copper chlorphyllin, ferrous gluconate, ferrous lactate, grape colour extract, enocianina, *Haematococcus* algae meal, fruit juice, vegetable juice, carrot oil, corn endosperm oil, paprika, paprika oleoresin, *Phaffia* yeast, riboflavin, saffron, titanium dioxide, turmeric oleoresin, bixin, and combinations thereof.

In another embodiment, the colored product contains a synthetic coloring product. Non limitative examples of said synthetic colour are FD&C Blue No. 1, FD&C Blue No. 2, FD&C Green No. 3, Orange B, Citrus Red No.2, FD&C Red No. 3, FD&C Red No. 40, FD&C Yellow No.5, FD&C Yellow No.6, Citrus Red No. 2, D&C Red No. 28, D&C Yellow No. 10, synthetic iron oxide, ferrous gluconate, ultramarine blue, ultramarine green, ultramarine violet, ultramarine red, and combinations thereof.

Such natural or synthetic colours are commercially available; alternatively, such colours can be synthesized according to known procedures by the skilled person in the art. One of ordinary skill in this art will recognize that the optimal amount of colour present in a given product is determined by factors such as overall desired colour, solubility, regulatory approval, etc. One of ordinary skill in this art can readily determine the optimal amount of colour for a given product based on those factors.

The colored beverage may be colored by virtue of the presence of one or more of the above-noted colours.

In a particular embodiment of the invention said compound (I) is present in said consumer product in an amount ranging from about 0.1 ppm to about 500 ppm. In a preferred embodiment, said compound (I) is present in an amount ranging from about 1 ppm to about 100 ppm. In a more preferred embodiment of the invention said compound (I) is present in an amount ranging from about 10 ppm to about 50 ppm.

In another particular embodiment of the invention, ascorbic acid is present in an amount ranging from about 0.1 to about 500 ppm. In a preferred embodiment, ascorbic acid is present in an amount ranging from about 1 to about 300 ppm. In a more preferred embodiment, ascorbic acid is present in an amount ranging from about 50 to about 200 ppm.

The naturally derived colour stabilizer according to the present invention may be provided to the consumer product in the form of a coloring composition. Said coloring composition may be included at any stage of manufacture of the product. As an example, when said product is a beverage, said coloring composition can be added to a syrup, concentrate, or to the finished beverage.

The present invention will now be described in more detail with reference to the following Examples, which should in no way be construed to be limiting the scope of the present invention.

### EXAMPLES

### Materials and methods

### Materials and Reagents

Phloretin (batch number 03K080) was supplied by Interquim, S.A. in Beniel (Murcia - Spain). β-carotene (Altratene 10% WSC lot number FEX1011004-5) was supplied by Allied Biotech Corp. (Taipei - Taiwan - R.O.C.). L-ascorbic acid (lot number 0000224398) and citric acid (lot number 0000128079) were from Panreac Química S.L.U. (Castellar del Vallès - Barcelona - Spain). Caramel colour E150D powder (ref No MDC/2892/15) and Red Beet juice powder (ref No MDC/2893/15) were supplied by Magnil Dye Chem (Mumbai - India).

For the preparation of beverages, mineral water (still and sparkling) was used. For analytical purposes, water was double distilled and purified through a Millipore system (Milli-Q).

### Beverage formulation in an initial study with β-carotene

Beverages were prepared by acidifying the medium (osmosis water) with citric acid at pH 3.3 and adding β-carotene from a stock solution. The study was performed at room temperature and in the presence of light.

The composition of the samples is shown in the following table:

**Table 1**

| Sample | Composition |
|---|---|
| 1 | 5 ppm β-carotene |
| 2 | 5 ppm β-carotene + 50 ppm phloretin |

Samples were analyzed initially and after 25 and 31 days of storage.

### Beverage formulation in the study with β-carotene

Beverages were prepared by acidifying the medium (still mineral water for non-carbonated beverages and sparkling water for carbonated beverages) with citric acid at pH 3.3 and adding β-carotene from a stock solution.

Phloretin stock solution was prepared by dissolving 400 mg phloretin in 10 mL propylene glycol. 87.5 µL or 25 µL of that solution was diluted to 100 mL with acidified water depending on the desired phloretin concentration.

Altratene stock solution was prepared by dissolving 100 mg Altratene 10% WSC in 20 mL water. 1 mL of that solution was diluted to 100 mL with acidified water.

The study was performed at room temperature and in the presence of light.

The composition of the samples is shown in the following table:

**Table 2.**

| Sample | Composition |
|---|---|
| A | 5 ppm β-carotene + 200 ppm vit C |
| B | 5 ppm β-carotene + 10 ppm phloretin |
| C | 5 ppm β-carotene + 35 ppm phloretin |
| D | 5 ppm β-carotene + 200 ppm vit C + 35 ppm phloretin |

Samples (5 non-carbonated bottles and 5 carbonated bottles) were prepared, bottled, pasteurized and closed. Non-carbonated samples were analyzed initially and after 7, 28, 47, 60, and 90 days of storage. Carbonated samples were analyzed initially and after 7, 28, 60, 75, and 114 days of storage.

### Beverage formulation study with natural colorants

In one series of experiments, beverages were prepared by acidifying the medium (deionised water) with citric acid at pH 3.3 and adding only caramel from a stock solution.

Phloretin stock solution was prepared by dissolving 400 mg phloretin in 10 mL propylene glycol. 125 or 250 µL of that solution was diluted to 100 mL with acidified water depending on the desired phloretin concentration.

Caramel stock solution was prepared by dissolving 250 mg Caramel in 50 mL water. 18 mL of that solution was diluted to 500 mL with acidified water. The test solution was 90 mL of the previous solution plus 10 mL methanol to avoid microbiological contamination (control). Therefore the concentration of Caramel in the test solution was 162 ppm.

In another series of experiments, Red Beet juice powder solution was prepared by dissolving 1250 mg Red Beet juice powder in 500 mL acidified water. The test solution was prepared with 90 mL of the previous solution plus 10 mL methanol to avoid microbiological contamination (control). Therefore, the concentration of Red Beet in the test solution was 2250 ppm.

The study was performed at room temperature and in the presence of light.

The composition of the samples can be seen in the following table:

**Table 3.**

| Sample | Composition |
|---|---|
| A | Control (90 mL + 10 mL MeOH) |
| B | Control + 50 ppm phloretin |
| C | Control + 100 ppm phloretin |
| D | Control + 200 ppm vit C |
| E | Control + 200 ppm vit C + 50 ppm phloretin |

Samples were prepared without pasteurization in Interquim S.A. Beniel (Murcia).

Samples were analyzed initially and after 28 days storage. In the case of the red beet study, analysis was performed after 15 days storage due to evident colour degradation.

### Analysis

Shimadzu 1650PC double beam spectrophotometer with a spectral bandwidth less than 2 nm and connected to a computer loaded with Shimadzu UVProbe 2.21 was used for all the spectrophotometric measurements.

The spectrum of the sample was performed between 200 nm and 600 nm to determine the absorption maxima at which absorbance was recorded. Absorbance was used as colour indication parameter.

For each maximum, it was performed a linearity study of absorbance versus β-carotene concentration (1-10 ppm with four points) obtained either by different Altratene weights or by different dilution of the stock Altratene solution.

Besides, from a stock solution five samples were prepared and the absorbance was recorded in order to study the repeatability of the method.

The colour change was studied by measuring the absorbance at two different wavelengths. Carbonated samples were degassed in beakers using an ultrasonic bath for 5 minutes and analysed. Non-carbonated samples were analysed directly without further treatment. Each sample was analysed in triplicate.

pH measurements were performed using a GLP21 (Crison) pH-meter.

In the case of the natural colourants, the same measurement equipment was used. The spectra of the sample were performed between 200 nm and 600 nm in order to determine the absorption maxima at which absorbance was recorded. In the case of Red Beet, the maxima 532 nm was chosen as wavelength to measure. In the case of Caramel, the maximum (270 nm) was interfered not only by ascorbic acid but also by phloretin; for that reason, and based on bibliography data, 390 nm was selected for measurement purposes.

### Results

### ß-carotene

### Initial study

The following table shows the absorbance results of the samples at 465 nm for the different sampling times:

**Table 4.**

| | **absorbance at 465 nm** | |
|---|---|---|
| **time (days)** | **1 (control)** | **2 (+Phloretin)** |
| 0 | 0,583 | 0,592 |
| 25 | 0 | 0,492 |
| 31 | 0 | 0,391 |

wherein 1 is the control beverage and 2 the beverage stabilized with 50 ppm phloretin.

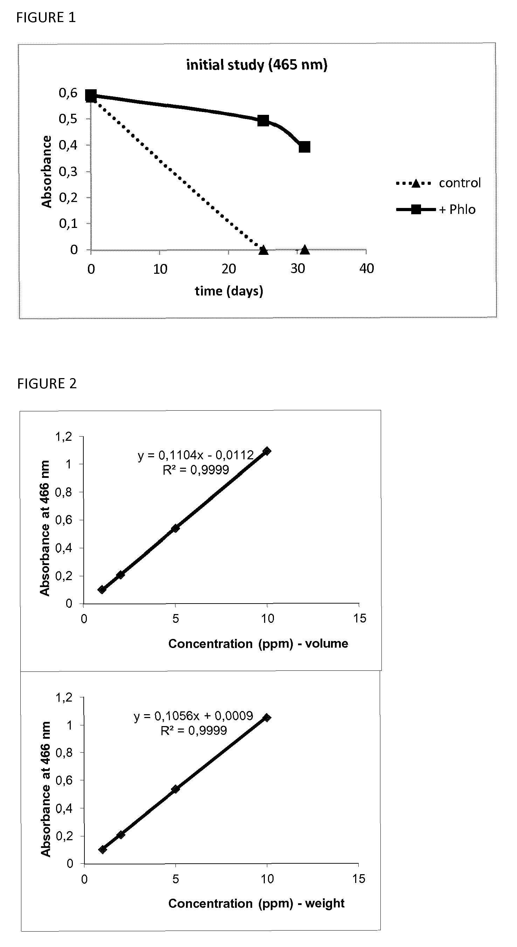

As can be seen in the Table 4 and Figure 1, the absorbance of the beverage without phloretin diminished dramatically after 25 days storage while the sample spiked with 50 ppm phloretin showed a reduction in the absorbance decay, i.e. the colour of the sample was kept for a longer period of time.

### Linearity study

The following table shows the absorbance results of the samples at 466 nm for the different β-carotene concentration by varying either the dilution volume or the Altratene weight:

**Table 5.**

| | **absorbance at 466 nm** | |
|---|---|---|
| **concentration (ppm)** | **varying volume** | **varying weights** |
| 1 | 0.103 | 0.104 |
| 2 | 0.207 | 0.211 |
| 5 | 0.538 | 0.535 |
| 10 | 1.094 | 1.054 |

As can be seen in Table 5 and Figure 2, there is a linear response with β-carotene concentration in the beverage, obtaining an r² parameter of 0.9999.

### Repeatability study

The following table shows the absorbance at 466 nm results of five dilutions from the same sample:

**Table 6.**

| **sample number** | **absorbance** |
|---|---|
| 1 | 0.525 |
| 2 | 0.526 |
| 3 | 0.527 |
| 4 | 0.526 |
| 5 | 0.529 |
| **average** | 0.527 |
| **STD** | 0.0015 |
| **RSD (%)** | 0.29 |

The low value of the RSD shows that the repeatability of the method has been satisfactory.

### Non-carbonated beverage study

The following table shows the absorbance results of the samples at 466 nm for the different sampling times:

**Table 7.**

| | **absorbance at 466 nm** | | | |
|---|---|---|---|---|
| **time (days)** | **A** | **B** | **C** | **D** |
| 0 | 0,490 | 0,463 | 0,467 | 0,478 |
| 7 | 0,460 | 0,451 | 0,472 | 0,481 |
| 28 | 0,404 | 0,322 | 0,375 | 0,428 |
| 47 | | 0,126 | 0,304 | 0,432 |
| 60 | | 0,092 | 0,126 | |
| 90 | 0,375 | | | 0,407 |

As it is shown in Table 7, see samples B and C, the beverage containing phloretin has been protected for a longer time than in the case of the beverage with nothing added (data extrapolated from the initial study). Even more interesting is the case of samples A and D, where in sample D it can be seen that phloretin has acted synergistically with ascorbic acid by providing a higher absorbance, i.e. a more stable colour over the time.

### Carbonated beverage study

The following table shows the absorbance results of the samples at 466 nm for the different sampling times:

**Table 8.**

| | **466,2 nm** | | | |
|---|---|---|---|---|
| **time (days)** | **A** | **B** | **C** | **D** |
| 0 | 0,454 | 0,467 | 0,474 | 0,457 |
| 7 | 0,427 | 0,497 | 0,482 | 0,483 |
| 28 | 0,416 | 0,408 | 0,410 | 0,439 |
| 60 | 0,406 | 0,271 | 0,337 | 0,446 |
| 75 | | 0,101 | 0,217 | |
| 114 | 0,372 | | | 0,435 |

In Table 8 it is shown that the colour in the carbonated beverage is more stable over time than in the non-carbonated because of the reduction of oxygen in the medium.

As in the previous case, as can be seen in samples B and C, the colour in the beverage has been protected for a longer time than in the case of the beverage with nothing added (data extrapolated from the initial study). Even more interesting is the case of samples A and D, where in sample D phloretin has acted synergistically with ascorbic acid by providing a higher absorbance, i.e. a more stable colour over the time.

### Natural colourants

### Red beet juice powder

The following table shows the absorbance results of the samples at 532 nm for the different sampling times:

**Table 9.**

| **time (days)** | **A** | **B** | **C** | **D** | **E** |
|---|---|---|---|---|---|
| 0 | 0.987 | 0.984 | 0.985 | 0.979 | 0.977 |
| 15 | 0.327 | 0.349 | 0.538 | 0.408 | 0.412 |
| 28 | 0.118 | 0.193 | 0.281 | 0.156 | 0.180 |

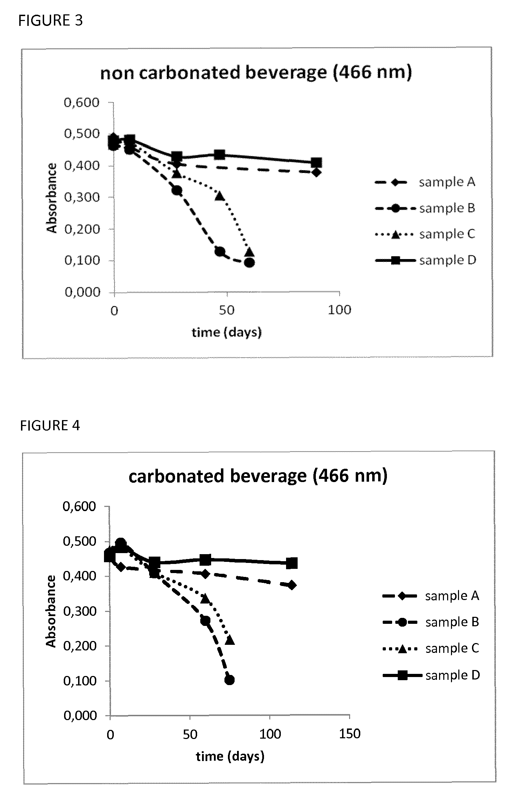

In Figure 4 the values for samples A and C are shown.

As mentioned above, in the case of red beet juice powder, the absorbance was measured after 15 days storage because the degradation of the colour was very evident and fast.

The results show that phloretin protects the degradation of the colour and it is concentration dependant.

### Caramel

The following table shows the absorbance results of the samples at 390 nm for the different sampling times:

**Table 10.**

| **time (days)** | **A** | **B** | **C** | **D** | **E** |
|---|---|---|---|---|---|
| 0 | 0.397 | 0.405 | 0.416 | 0.398 | 0.406 |
| 28 | 0.298 | 0.302 | 0.343 | 0.272 | 0.268 |

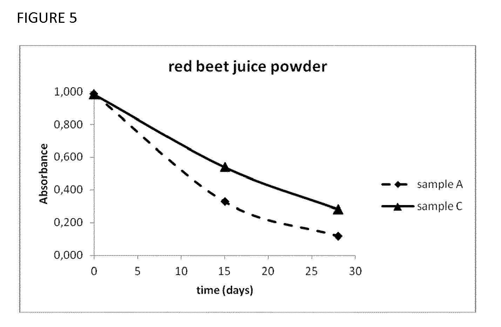

In Figure 5 the values of samples A and C are shown as an example. The absorbance data indicate that phloretin protects this natural colorant from degradation (Table 10 and Figure 5).

## Claims

1. Use of a compound of formula (I) or a derivative or salt thereof 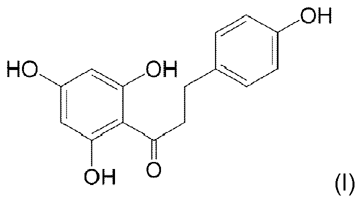 for stabilizing the colour in a colored product.

2. Use of a compound of formula (I) or a derivative or salt thereof 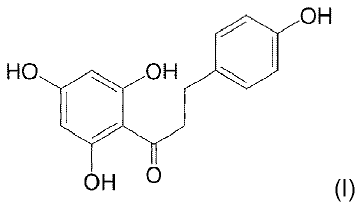 for preventing colour instability or colour fading in a colored product.

3. Use according to claim 1 or 2, wherein said product is a consumer product.

4. Use according to claim 3, wherein said consumer product is selected from the group consisting of a beverage, a food product, a cosmetic or personal care product, a pharmaceutical product, and a cleaning agent product.

5. Use according to the preceding claim, wherein said product is a beverage.

6. Use according to any of the preceding claims, wherein said compound (I) is used in combination with ascorbic acid.

7. Use according to any of the preceding claims, wherein said colored product comprises a naturally derived colour or its synthetic equivalent or a synthetic colour.

8. Use according to the preceding claim, wherein said naturally derived colour is selected from the group consisting of *Annatto* extract, astaxanthin, dehydrated beets, canthaxanthin, caramel, Beta-apo-8'-carotenal, beta-carotene, cochineal extract, carmine, sodium copper chlorphyllin, ferrous gluconate, ferrous lactate, grape colour extract, enocianina, *Haematococcus* algae meal, fruit juice, vegetable juice, carrot oil, corn endosperm oil, paprika, paprika oleoresin, *Phaffia* yeast, riboflavin, saffron, titanium dioxide, turmeric oleoresin, bixin, and combinations thereof.

9. Use according to claim 7, wherein said synthetic colour is selected from the group consisting of FD&C Blue No. 1, FD&C Blue No. 2, FD&C Green No. 3, Orange B, Citrus Red No.2, FD&C Red No. 3, FD&C Red No. 40, FD&C Yellow No.5, FD&C Yellow No.6, Citrus Red No. 2, D&C Red No. 28, D&C Yellow No. 10, synthetic iron oxide, ferrous gluconate, ultramarine blue, ultramarine green, ultramarine violet, ultramarine red and combinations thereof.

10. Use according to any of the preceding claims, wherein said compound (I) is present in an amount ranging from about 0.1 ppm to about 500 ppm.

11. Use according to any of the preceding claims, wherein said compound (I) is present in an amount ranging from about 1 ppm to about 100 ppm.

12. Use according to any of the preceding claims, wherein said compound (I) is present in an amount ranging from about 10 ppm to about 50 ppm.

13. Use according to any of claims 5 to 11, wherein ascorbic acid is present in an amount ranging from about 0.1 ppm to about 500 ppm.

14. Use according to the preceding claim, wherein ascorbic acid is present in an amount ranging from about 1 ppm to about 300 ppm.

15. Use according to the preceding claim, wherein ascorbic acid is present in an amount ranging from about 50 ppm to about 200 ppm.

16. A method of stabilizing the colour, preventing colour instability or colour fading in a colored product which comprises combining an effective amount of a compound of formula (I) or a derivative or salt thereof 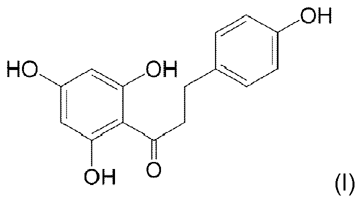 or a coloring composition comprising an effective amount of the compound of formula (I) or a derivative or salt thereof with the finished product or with a precursor thereof.
